# EUROPÄISCHE PATENTSCHRIFT

(11) **EP 1 316 213 B1**
(45) Veröffentlichungstag und Bekanntmachung des Hinweises auf die Patenterteilung: **03.11.2004**
(21) Anmeldenummer: 01962930.2
(22) Anmeldetag: 10.08.2001
(51) Int. Cl.: H04N 7/167

(54) **VERFAHREN ZUM BEDINDGTEN ZUGRIFF AUF NUTZDATEN ZUR UNTERSTÜTZUNG DER WERBEFINANZIERUNG VON MULTIMEDIA-INHALTEN**
METHOD FOR CONDITIONAL ACCESS TO PAYLOAD DATA FOR SUPPORTING FINANCING OF MULTIMEDIA CONTENT THROUGH ADVERTISING
PROCEDE D'ACCES CONDITIONNEL A UN CONTENU UTILE POUR ASSISTER AU FINANCEMENT DE CONTENUS MULTIMEDIA PAR PUBLICITE

(30) Priorität: 01.09.2000 DE 10044051
(43) Veröffentlichungstag der Anmeldung: 04.06.2003
(73) Patentinhaber: Deutsche Telekom AG, 53113 Bonn (DE)
(72) Erfinder: SAAR, Eva, 64347 Griesheim (DE); SCHWENK, Jörg, 91239 Henfenfeld (DE)
(86) Internationale Anmeldenummer: PCT/EP2001/009237
(87) Internationale Veröffentlichungsnummer: WO 2002/019710

(56) Entgegenhaltungen:
- WO-A-99/30498
- PATENT ABSTRACTS OF JAPAN vol. 1998, no. 11, 30. September 1998 (1998-09-30) -& JP 10 164550 A (TOSHIBA CORP), 19. Juni 1998 (1998-06-19)
- COX I J ET AL: "SOME GENERAL METHODS FOR TAMPERING WITH WATERMARKS" IEEE JOURNAL ON SELECTED AREAS IN COMMUNICATIONS, IEEE INC. NEW YORK, US, Bd. 16, Nr. 4, Mai 1998 (1998-05), Seiten 587-593, XP000765117 ISSN: 0733-8716

## Beschreibung

Die Erfindung betrifft ein Verfahren der im Oberbegriff des Patentanspruchs 1 näher bezeichneten Art. Derartige Verfahren sind allgemein aus dem werbefinanzierten Free-TV bekannt und verbreitet und werden von Werbeträgern verwendet, welche die Darbietung von Nutzdaten mit der Darbietung von zeitweise eingeblendeten Werbeblöcken finanzieren wollen.

Die Verbreitung von Medien wird häufig über Werbeunterbrechungen finanziert. Dies ist heute im Fernsehbereich kein Problem, da der Kunde eine Sendung im Fernsehen nicht "vorspulen" kann. Dem Verhalten des "Zappens" wird von Seiten der Sender durch eine weitgehende Synchronisierung der Werbung Rechnung getragen.

Anders sieht es im Bereich aufgezeichneter Inhalte aus, z. B. bei Aufnahmen von Fernsehsendungen auf Videokassetten. Hier hat der Nutzer oft die Möglichkeiten, die Werbung zu umgehen, indem er einen Videofilm vorspult, bis die Werbung beendet ist. Dieses Problem tritt vor allem im Videobereich auf und ist auch für andere Medien (CD, DVD) denkbar.

In JP-A-10 164 550 wird eine Lösung beschrieben, bei der Werbeinformationen in eine Sendung bzw. ein Programm einer Rundfunksendestelle eingebettet sind. Dabei ist in die Werbeinformation ein Schlüssel eingefügt, der zusammen mit der Werbesendung zum Konsumenten übertragen wird. Mittels dieses Schlüssels ist es möglich, die der Werbesendung nachfolgende Nutzdaten zu entschlüsseln, so dass sie der Konsument auch konsumieren kann. Die Lösung bezieht sich insbesondere auf das analoge Fernsehen, aber auch auf analoge und digitale Aufzeichnung.

Eine neue Dimension erhält das Problem mit einer Entwicklung, die von der Standardisierungsinitiative "TV Anytime" (http://www.tv-anytime.org/) gebündelt wird: In Zukunft werden Fernseher, Videorecorder und/oder Set-Top-Boxen Speichermedien (z. B. Festplatten mit 50 bis 100 Gigabyte Kapazitäten) enthalten, die es ermöglichen, Inhalte ("Content") nach Herzenslust gleichzeitig aufzunehmen und wiederzugeben. Dadurch wird es für den Kunden um ein Vielfaches leichter, Werbepausen zu umgehen:
- Der Kunde zeichnet ca. 15 Minuten der Sendung auf.
- Dann beginnt er, diese anzuschauen.
- Wann immer eine Werbepause auftritt, überspringt er diese und setzt nach der Pause wieder an.

Der Schutz des "Content" war ein wichtiges Anliegen des DVD Standardisierungsgremiums (www.dvdforum.com). Daher wurde für DVD ein Verschlüsselungssystem (Content Scrambling System, CSS) spezifiziert. Nach diesem wird jedem Datenblock auf der DVD ein sogenannter "Header" vorangestellt, der den mit dem "disk key" verschlüsselten "title key" enthält. Mit diesem "title key" und einigen Zusatzbits kann dann der Inhalt der Nutzdaten (Content des Files) entschlüsselt werden.

Die Aufgabe der Erfindung ist es, ein Verfahren und dazu eine Vorrichtung aufzuzeigen, mit der sichergestellt werden kann, dass die Werbung tatsächlich abgespielt werden muss. (Der Kunde kann natürlich nicht gezwungen werden, diese auch anzusehen.) Mit dieser Methode werden auch neue Vermarktungsarten für durch Werbung finanzierte sogenannte "Content" möglich.

Die Erfindung löst diese Aufgabe mit den im Kennzeichen des Patentanspruchs 1 aufgeführten Verfahrensschritten.

Eine Vorrichtung, die zur Lösung dieser Aufgabe geeignet ist, ist im Kennzeichen des Patentanspruchs 6 beschrieben.

Vorteilhafte Aus- bzw. Weiterbildungen des Verfahrens sind in den Unteransprüchen 2 bis 5 beschrieben.

Nachfolgend wird die Erfindung anhand einiger Ausführungsbeispiele näher beschrieben.

Wie bereits aus JP-A-10 164 550 bekannt, ist es möglich, einen Nutzinhalt ("Content" z. B. ein Film) in verschiedene Blöcke aufzuteilen, die jeweils mit einem "title key" Schlüssel verschlüsselt werden. Vor und zwischen diese Blöcke werden dann unverschlüsselte Werbeblöcke geschoben, die diesen Schlüssel enthalten. Ein Abspielgerät muß einen Großteil, möglichst sogar den ganzen Werbeblock abtasten ("scannen"), um an den Schlüssel zu gelangen. Dazu werden nachfolgend, ohne Anspruch auf Vollständigkeit, einige Varianten als Möglichkeiten der Realisierung aufgezeigt:

Die einfachste Möglichkeit besteht darin, den ganzen Schlüssel "title key" zu einem zufällig gewählten Zeitpunkt im Werbeblock zu verstecken. Das Abspielgerät muss dann im Mittel etwa die halbe Zeit des Werbeblocks abtasten ("scannen"), um ihn zu finden.
Bereits eine erfindungsgemäße Aufteilung des Schlüssels in zwei Codeelemente, die auf die erste und die zweite Hälfte des Werbeblockes an zufällige Zeitpunkte verteilt werden, zwingt zum "Scannen" über einen längeren Zeitraum, der proportional der Aufteilung in mehr Codeelemente steigt.

Eine zweite Möglichkeit besteht in der Zerlegung des "title key"- Schlüssels mit sogenannten ,Secret Sharing Schemes' in mehrere Teilgeheimnisse, die im Werbeblock versteckt werden. Das sind Schemata, bei denen man mehrere Teilgeheimnisse benötigt, die dann zu einem vollständigen Geheimnis zusammengesetzt werden. (Literatur: Beutelspacher, Schwenk, Wolfenstetter, "Moderne Verfahren der Kryptographie", Vieweg Verlag, 3. Auflage 2000)

Dieses Prinzip verlängert die notwendige Zeit zum Abtasten des Werbeblockes erheblich, indem in gewissen Abständen (z. B. in jedem Werbespot oder alle 10 Sekunden) während der Werbepause ein Teilgeheimnis in die Daten eingebracht wird. Diese Teilgeheimnisse werden während des Abspielens gesammelt, z. B. vom Abspielgerät.

Die folgenden Nutzdaten sind dann mit dem vollständigen Geheimnis als "title key" Schlüssel verschlüsselt und werden nur dann angezeigt, wenn ausreichend Teilgeheimnisse gesammelt wurden.

Unter welchen Bedingungen das der Fall ist, ist von dem verwendeten Secret Sharing Scheme abhängig. Denkbar sind Variationen, bei denen alles oder nur ein Teil der Werbung ablaufen muss, dabei kann ein Teil Pflicht, andere wahlweise sein.

Weitere Varianten des Verfahrens können hinsichtlich der Vollständigkeit der Codeelemente sinnvoll sein:

Die Variante, dass alle Teilgeheimnisse gesammelt werden müssen, ist nur sinnvoll bei vorbespielten Medien wie z. B. CD, DVD oder Videos. Hier kann sichergestellt werden, dass ein Abspielgerät auch wirklich alle Teilgeheimnisse empfangen kann.

Die zweite Variante besteht darin, dass k aus n Teilgeheimnisse gesammelt werden müssen.
Diese Variante empfiehlt sich für Rundfunksendungen, da sich hier ein Kunde ggf. später zuschalten kann und so keine Gelegenheit hat, die Teilgeheimnisse zu sammeln. Schaltet er sich erst nach der Werbepause zu, so muss er entweder eine gewisse "Strafzeit" warten, bis er außerhalb der Werbepause genug Teilgeheimnisse gesammelt hat, oder er ruft den Sitzungsschlüssel online bei einem Server ab.

Wie die Teilgeheimnisse in die Daten eingebracht werden, hängt von dem Medium ab. Auch eine Realisierung mittels digitaler Wasserzeichen ist vorstellbar.

Eine weitere Variante besteht im Einfügen als digitale Zusatzinformation:

Hierbei werden die Teilgeheimnisse als spezielle Teile der Programm- Zusatzinformation auf digitaler Ebene dargestellt, z. B. als Teil der Service Information (SI) bei digitalem Fernsehen nach DVB, als Zusatzinformation im Datenteil von DVD (Entschlüsselung mittels CSS-Algorithmus) oder als eigene IP- Pakete bei IP- basierten Streaming-Anwendungen.

Eine weitere Variante besteht im Einfügen als Wasserzeichen,

Dabei werden die Daten als Wasserzeichen in den Inhalt ("Content") selber eingestellt. Dies verhindert ein Abtasten ("Scannen") der digitalen Zusatzinformationen mit Hilfsprogrammen. Der Aufwand eines solchen Scannens wäre äquivalent zum Darstellen des Contents, und es ergäben sich keine Vorteile.

Mit Hilfe der beschriebenen Erfindung können neue Produkte realisiert werden:
- Endgeräte für den Empfang bestimmter Kabelprogramme oder durch Werbung finanzierter Sendungen bzw. Abspielgeräte für Aufzeichnungen mit Werbeblöcken,
- Kostenlose Giveaway- DVD, -MPEG-CD, Audio-CD, die sich über Werbeeinlagen finanzieren. (Zum Beispiel eine DVD über die Geschichte des Radsports, die von Telekom-Werbeblöcken zum Team Telekom unterbrochen wird, als Geschenk in den T- Punkten. Oder der neue James Bond, bei dem bei jedem Auftreten eines BMW im Film der entsprechende Werbeblock zu diesem Modell eingeblendet wird.)
- Durch Werbung finanzierte Inhalte für TV-Anytime.

## Patentansprüche

1. Verfahren zur Werbefinanzierung von Multimedia-Inhalten, die zwischen der Benutzung der Nutzdaten das Abspielen von Werbeblöcken enthalten, deren Träger die Benutzung der Nutzdaten finanzieren, wobei in die Werbeblöcke Schlüssel eingefügt sind, die zur Entschlüsselung der jeweils nachgeordneten Nutzdaten benötigt werden,
**dadurch gekennzeichnet, dass**
- in einige Stellen eines Werbeblocks Codeelemente des Schlüssels eingebettet werden,
- diese Codeelemente des Schlüssels während des Abspielens eines Werbeblocks abgetastet und gesammelt werden,
- die Codeelemente schematisch zu einem vollständigen Schlüssel verknüpft werden,
- die nachfolgenden Nutzdaten unter Nutzung des vollständigen Schlüssels verschlüsselt werden,
- die Benutzung der Nutzdaten von einem vom Werbeträger zu bestimmenden Teil der Codeelemente bzw. vom vollständigen Schlüssel abhängig gemacht und ohne deren Erreichen gesperrt wird.

2. Verfahren nach Anspruch 1, **dadurch gekennzeichnet, dass** die Stellen in den Werbeblöcken wechselnd, bzw. zufällig gewählt werden.

3. Verfahren nach Anspruch 1, **dadurch gekennzeichnet, dass** als Codeelemente Teilgeheimnisse eines Shared Secret Systems verwendet werden, die zu einem in seinem Umfang vorgegebenen vollständigen Geheimnis zusammengesetzt werden.

4. Verfahren nach Anspruch 1 bis 3, **dadurch gekennzeichnet, dass** die Schlüssel bzw. Teilgeheimnisse in den Werbeblöcken als spezielle Teile der Programm-Zusatzinformation auf digitaler Ebene dargestellt werden, insbesondere als Teil der Service- Information bei digitalem Fernsehen nach DVB, bzw. als Zusatzinformation im Datenteil von DVD, bzw. als eigene IP- Pakete bei IP- Anwendungen.

5. Verfahren nach Anspruch 1 bis 3, **dadurch gekennzeichnet, dass** der vollständige Schlüssel, bzw. dessen Codeelemente als Wasserzeichen in den Inhalt der Werbeblöcke eingestellt werden.

6. Vorrichtung zur Nutznug des Verfahrens nach Anspruch 1 bis 5, **dadurch gekennzeichnet, dass** sie ein Endgerät umfaβt, das für die bevorzugte Wiedergabe gespeicherter bzw. gesendeter Werbeblöcke, insbesondere solche, die zu Vorzugsbedingungen vergeben werden, mit Entschlüsselungseinrichtungen versehen ist, welche das Sammeln der Codeelemente des Verfahrens beherrschen und mit einer Sperrschaltung der vorrichtung verbunden sind, die den auf einen Werbeblock folgenden Nutzinhalt nur bei vollständiger Wiedergabe des Werbeblocks freigibt.

## Claims

1. Method for the financing-through-advertising of multimedia content containing between the use of the useful data the playback of advertising blocks whose sponsors finance the use of the useful data, wherein keys are inserted into the advertising blocks, said keys being required for decrypting the following useful data,
**characterized in that**
- code elements of the key are embedded in some places of an advertising block;
- said code elements of the key are scanned and collected during the playback of an advertising block;
- the code elements are linked schematically to form a complete key;
- the following useful data are encrypted using the complete key;
- the use of the useful data is made dependent on a portion of the code elements to be determined by the advertising sponsor and/or on the complete key and is blocked if the latter is not reached.

2. Method according to claim 1, **characterized in that** the places in the advertising blocks are selected in an alternating and/or random manner.

3. Method according to claim 1, **characterized in that** part-secrets of a shared secret system are used as the code elements, said part-secrets being combined to form a complete secret of predetermined scope.

4. Method according to claims 1 to 3, **characterized in that** the keys and/or part-secrets are represented in the advertising blocks as special portions of the additional program information at the digital level, more particularly as part of the service information in the case of digital television according to DVB and/or as additional information in the data portion of DVD and/or as separate IP packets in the case of IP applications.

5. Method according to claims 1 to 3, **characterized in that** the complete key and/or the code elements thereof are inserted as water marks in the content of the advertising blocks.

6. Device for use of the method according to claims 1 to 5, **characterized in that** said device comprises a terminal, wherein, for the preferential playback of stored and/or transmitted advertising blocks, more particularly those which are awarded under preferential conditions, said terminal is provided with decryption means which control the collection of the code elements of the method and which are connected to a blocking circuit of the device, wherein said blocking circuit only unblocks the useful content following an advertising block if the advertising block has been played back in full.

## Revendications

1. Procédé de financement par publicité de contenus multimédias qui comprennent, entre l'utilisation des données utiles, la diffusion de blocs publicitaires dont les auteurs financent l'utilisation des données utiles, des clés étant insérées dans les blocs publicitaires, qui sont nécessaires pour décrypter les données utiles correspondantes,
**caractérisé en ce que**
- des éléments de code de la clé sont insérés à certains points d'un bloc publicitaire,
- ces éléments de code sont balayés et collectés pendant la diffusion d'un bloc publicitaire,
- les éléments de code sont schématiquement assemblés en une clé complète,
- les données utiles suivantes sont codées à l'aide de la clé complète,
- l'utilisation des données utiles est conditionnée par une partie des éléments de code à déterminer par l'auteur de publicité ou par la clé complète et est bloquée tant que tous les éléments nécessaires ne sont pas réunis.

2. Procédé selon la revendication 1, **caractérisé en ce que** les points en question des blocs publicitaires changent ou sont choisis au hasard.

3. Procédé selon la revendication 1, **caractérisé en ce que** sont utilisés comme éléments de code des secrets partiels d'un Shared Secret System, qui sont compilés en un secret complet, dont la longueur est prédéterminée.

4. Procédé selon les revendications 1 à 3, **caractérisé en ce que** les clés ou secrets partiels sont représenté(e)s dans les blocs publicitaires, au niveau numérique, comme des parties spéciales des informations supplémentaires du programme, et notamment comme partie de l'information de service dans la télévision numérique de norme DVB ou comme information supplémentaire dans la partie data de DVD, ou encore comme propre paquet IP dans les applications IP.

5. Procédé selon les revendications 1 à 3, **caractérisé en ce que** la clé complète ou ses éléments de code sont insérés comme filigrane dans le contenu des blocs publicitaires.

6. Dispositif permettant d'utiliser le procédé selon les revendications 1 à 5, **caractérisé en ce qu'**il comprend un équipement terminal doté d'installations de décryptage pour la reproduction privilégiée de blocs publicitaires enregistrés ou émis, et en particulier de tels blocs qui sont attribués à des conditions préférentielles, ces installations de décryptage étant en mesure de collecter les éléments de code du procédé et étant reliées à un montage de blocage du dispositif, qui ne rend accessible le contenu utile suivant un bloc publicitaire que si le bloc publicitaire a été reproduit dans son intégralité.
